# NEUE EUROPÄISCHE PATENTSCHRIFT

(11) **EP 3 395 707 B2**
(45) Veröffentlichungstag und Bekanntmachung des Hinweises auf die Entscheidung über den Einspruch: **21.05.2025**
(45) Hinweis auf die Patenterteilung: 01.09.2021
(21) Anmeldenummer: 17168246.1
(22) Anmeldetag: 26.04.2017
(51) Int. Cl.: B65D 17/00, B65D 1/16, B65D 1/02

(54) **GETRÄNKEDOSE AUS EINHEITLICHER ALUMINIUMLEGIERUNG**
BEVERAGE CAN MADE FROM UNIFORM ALUMINIUM ALLOY
CANETTE D'UN SEUL TENANT EN ALLIAGE D'ALUMINIUM

(43) Veröffentlichungstag der Anmeldung: 31.10.2018
(73) Patentinhaber: Speira GmbH, 41515 Grevenbroich (DE)
(72) Erfinder: KASPER, Boris, 98597 Breitungen/Werra (DE); MERTENS, Manfred, 41334 Nettetal (DE); ENGLER, Dr. Olaf, 53229 Bonn (DE); BAKIREL, Ishak, 50859 Köln (DE); HÜLLENHÜTTER, Thomas, 53332 Bornheim (DE)
(74) Vertreter: Cohausz & Florack

(56) Entgegenhaltungen:
- EP-A1- 1 982 923
- DE-T2- 3 884 405
- GB-A- 2 242 159
- US-A1- 2015 376 739

## Beschreibung

Die Erfindung betrifft eine Getränkedose bestehend aus einem Dosenkörper zur Aufnahme des Getränks und einem Dosendeckel zum Verschließen des Dosenkörpers, wobei der Dosenkörper aus einer Aluminiumlegierung vom Typ AA3XXX ausgebildet ist. Daneben betrifft die Erfindung eine Verwendung eines Aluminiumlegierungsband aus einer Aluminiumlegierung vom Typ AA3XXX zur Herstellung eines Dosendeckels für eine Getränkedose.

Zweiteilige Getränkedosen bestehen in der Regel aus einem Dosendeckel mit einer Lasche zum Öffnen der Getränkedose sowie einem Dosenkörper, auch als Unterteil bezeichnet, welcher mit dem Dosendeckel über eine Bördelung bei der Herstellung verbunden wird. Für den Dosenkörper werden in der Regel Aluminiumlegierungen vom Typ AA3xxx eingesetzt. Diese Legierungen zeichnen sich insbesondere durch gute Umformeigenschaften beim Tiefziehprozess sowie ausreichende Festigkeiten für den Dosenkörper aus. Für den Dosendeckel werden allerdings Legierungssysteme mit höherem Magnesiumanteil vom Typ AA5xxx, meistens vom Typ AA5182 oder AA5052 und für die Lasche auch vom Typ AA5042 verwendet. Der Grund für die Verwendung höherfester Aluminiumlegierungen für den Dosendeckel liegt darin, dass diese Legierungen die notwendige Innendruckstabilität bereitstellen können, sollte der Innenraum der Getränkedose, beispielsweise bei kohlensäurehaltigen Getränken oder beim Erwärmen des Doseninhalts, unter Druck stehen. Andernfalls kommt es zu einem unerwünschten Ausbeulen des Dosendeckels, wenn der Innendruck zu groß wird. Beim Recyceln der Getränkedosen führt der erhöhte Magnesiumgehalt des Dosendeckels dazu, dass das Magnesium teilweise abbrennt und zu einem erhöhten Krätzeanteil in der Aluminiumsschmelze führt. Das Recycling gestaltet sich zusätzlich auch deshalb schwieriger, weil unterschiedliche Legierungssysteme, also Aluminiumlegierungen vom Typ AA3xxx und AA5xxx eingeschmolzen werden und damit eine Aluminiumschmelze erhalten wird, welche nicht unmittelbar der Ausgangslegierung des Reziklats entspricht. Für das Recycling wäre es daher wünschenswert, Aluminiumlegierungen vom Typ AA3xxx für den Dosendeckel einzusetzen, da diese mit den Aluminiumlegierungen des Dosenkörpers kompatibel sind und so eine Unialloy-Getränkedose bereitgestellt werden kann. Um die notwendige Innendruckstabilität zur Verfügung zu stellen, müssten aber deutlich höhere Materialdicken für Deckel bestehend aus AA3xxx-Legierungen verwendet werden, sodass entsprechende Dosen wirtschaftlich mit den weniger Material benötigenden Getränkedosen bestehend aus unterschiedlichen Aluminiumlegierungen nicht konkurrieren können. Bisherige Versuche eine aus einem einheitlichen Legierungskonzept bestehende Getränkedose (Unialloy-Getränkedose) wirtschaftlich bereitzustellen, sind daher gescheitert.

So ist beispielsweise aus der internationalen Patentanmeldung WO 2016/063876 A1 eine Aluminiumlegierung vom Typ AA5xxx für einen Getränkedosendeckel bekannt, welche hohe Magnesiumanteile in der Legierung aufweist. Aus der internationalen

Patentanmeldung WO 2017/016686 A1 ist darüber hinaus ein Dosendeckel für eine wiederverschließbare Dose bekannt, welcher auf der äußeren und inneren Oberfläche eine Versiegelungsschicht aufweist, mit welcher Kunststoffmaterialien für den wiederverschließbaren Deckel über eine Heißversiegelung fest mit der Metallschicht verbunden werden können. Hinweise auf die zu verwendenden Legierungssysteme für den Dosendeckel bzw. den Dosenkörper enthält die zuletzt genannte internationale Patentanmeldung nicht.

Dokument US2015376739 A1 offenbart eine Getränkedose nach dem Oberbegriff des Anspruchs 1

Hiervon ausgehend hat sich die Erfindung die Aufgabe gestellt, eine Getränkedose vorzuschlagen, welche aus einem einheitlichen Legierungskonzept besteht, wirtschaftlich herstellbar ist und ein verbessertes Recyclingverhalten aufweist. Darüber hinaus hat sich die Erfindung die Aufgabe gestellt, eine Verwendung eines Aluminiumlegierungsband aus einer Aluminiumlegierung vom Typ AA3XXX für die Herstellung des Dosendeckels der erfindungsgemäßen Getränkedose bereitzustellen. Die Aufgabe wird durch eine Getränkedose nach Patentanspruch 1 und eine Verwendung eines Aluminiumlegierungsbands nach Patentanspruch 7 gelöst.

Gemäß einer ersten Lehre der vorliegenden Erfindung wird die aufgezeigte Aufgabe für eine Getränkedose dadurch gelöst, dass der Dosendeckel aus einer Aluminiumlegierung vom Typ AA3xxx ausgebildet ist und zumindest teilflächig, vorzugsweise vollflächig eine Beschichtung aufweist, welche eine Haftvermittlerschicht und eine Polypropylenschicht mit einer Dicke von 5 bis 100 µm, vorzugsweise 10 bis 75 µm umfasst. Erfindungsgemäß ist die Beschichtung auf der zum Dosenkörper weisenden Seite des Dosendeckels angeordnet. Erfindungsgemäß weist der Dosendeckel auch eine äußere Lackschicht auf, welche vorwiegend zum Korrosionsschutz und zur Erzielung von Umformeigenschaften in der Herstellung dient. Schließlich sind weiter bevorzugt auf der zum Dosenkörper weisenden Seite des Dosendeckels nur die Haftvermittlerschicht und die Polypropylenschicht vorgesehen, um den Produktionsprozess möglichst kostengünstig zu gestalten.

Es wurde erkannt, dass die Innendruckstabilität von Dosendeckeln hergestellt aus einem Aluminiumlegierungsband bestehend aus einer Aluminiumlegierung vom Typ AA3xxx dadurch bereitgestellt werden kann, dass zusätzlich eine Polypropylenschicht mit einer Dicke von 5 bis 100 µm, vorzugsweise 10 bis 75 µm fest mit dem Metall des Dosendeckels über eine Haftvermittlerschicht verbunden ist. Versuche und Simulationen haben gezeigt, dass die notwendige Innendruckstabilität für Getränkedosen durch die Kombination an Metallschicht und Polypropylenschicht mit einer dazwischen angeordneten Haftvermittlerschicht bereitgestellt werden kann. Damit ist es möglich, ein einheitliches Legierungskonzept für Getränkedosen durch AA3xxx Legierungen zur Verfügung zu stellen. Die Recyclingfähigkeiten der erfindungsgemäßen Getränkedose, welche ausschließlich Aluminiumlegierungen vom Typ AA3xxx aufweist, sind dadurch deutlich verbessert.

Gemäß einer erster Ausgestaltung der erfindungsgemäßen Getränkedose besitzt die Haftvermittlerschicht Siegeleigenschaften und weist optional Polyolefin auf. Unter Siegeleigenschaften wird verstanden, dass die Haftvermittlerschicht unter Wärmeeinwirkung in der Lage ist, die Verbindung zwischen der Polypropylenschicht und der Metallschicht des Dosendeckels aufzubauen und bei den Gebrauchstemperaturen zur Verfügung zu stellen. Polyolefin besitzt die Eigenschaft, die Siegeleigenschaften spezifisch auf die zu verwendenden Siegeltemperaturen gut einstellen zu können und hohe Haftkräfte bereitstellen kann. Bevorzugt wird die Haftvermittlerschicht durch Verwendung einer Polyolefindispersion bei deren Herstellung bereitgestellt. Hierdurch können auch extrem geringe Schichtdicken der Haftvermittlerschicht mit guten Hafteigenschaften bereitgestellt werden.

Bei der erfindungsgemäßen Getränkedose ist eine Polypropylenschicht, vorgesehen. Polypropylen weist in Bezug auf Lebensmittel sehr gute Eigenschaften auf und ist auch beim Recycling der Getränkedose unbedenklich. Erfindungsgemäß kann eine Polypropylenschicht mit einer Dicke von 5 bis 100 µm, vorzugsweise 10 bis 75 um die erforderliche Innendruckstabilität des Dosendeckels bereitstellen.

Besonders einfach kann die Polypropylenschicht der Getränkedose gemäß einer nächsten Ausgestaltung mit einer Polypropylenfolie bereitgestellt werden. Hierdurch können beispielsweise wirtschaftliche und großtechnisch bekannte Laminierungsprozesse für die Herstellung des Aluminiumlegierungsbandes des Dosendeckels verwendet werden.

Erfindungsgemäß weist die Haftvermittlerschicht eine Dicke von 2 bis 20 g/m², vorzugsweise 2 bis 10 g/m² auf. Bei entsprechender Haftvermittlerschichtdicke kann besonders prozesssicher die Haftung zwischen der Polypropylenschicht und der Metallschicht des Dosendeckels gewährleistet werden.

Bevorzugt ist als Aluminiumlegierung für den Dosenkörper und/oder den Dosendeckel gemäß einer weiteren Ausgestaltung eine Aluminiumlegierung vom Typ AA3104, AA3105 oder AA3004 vorgesehen. Werden identische Aluminiumlegierungen für den Dosenkörper und den Dosendeckel verwendet, kann über ein Recycling der Dosen eine maximale Metallausbeute erreicht werden. So kann in diesem Fall beispielsweise die recycelte Metalllegierung unmittelbar für die Herstellung von Dosenkörpern und Dosendeckeln verwendet werden. Vorzugsweise weist die Haftvermittlerschicht eine Dicke von 0,5 bis 20 g/m², vorzugsweise 2 bis 10 g/m² auf. Bei entsprechender Haftvermittlerschichtdicke kann besonders prozesssicher die Haftung zwischen der Polymerschicht und der Metallschicht des Dosendeckels gewährleistet werden.

Erfindungsgemäß ist ein Dosendeckel mit einer Metalldicke von 0,12 mm bis 0,23 mm, vorzugsweise 0,16 mm bis 0,23 mm vorgesehen. Bei Verwendung dieser Metalldicken wird ein besonders niedriger Metallverbrauch erzielt und trotzdem ein ausreichend innendruckstabiler Dosendeckel bereitgestellt.

Gemäß einer zweiten Lehre der vorliegenden Erfindung wird die oben aufgezeigte Aufgabe durch die Verwendung eines Aluminiumlegierungsbands zur Herstellung eines Dosendeckels für eine Getränkedose gelöst, wobei das Band aus einer Aluminiumlegierung vom Typ AA3xxx besteht, zumindest teilflächig, vorzugsweise vollflächig und vorzugsweise auf der zum Dosenkörper weisenden Seite eine Beschichtung aufweist, welche eine Haftvermittlerschicht und eine Polypropylenschicht mit einer Dicke von 5 bis 100 µm, vorzugsweise 10 bis 75 µm umfasst. Wie bereits zuvor ausgeführt, kann durch die Verwendung des Aluminiumlegierungsbands ein Dosendeckel aus einer AA3xxx Aluminiumlegierung hergestellt werden, welcher die notwendige Innendruckstabilität für die Verwendung in Getränkedosen aufweist. Die Innendruckstabilität erlaubt es, dass der Inhalt der Getränkedose unter Druck stehen kann, beispielsweise weil das Getränk Kohlensäure enthält oder durch Sonneneinstrahlung der geschlossene Innenraum der Getränkedose erwärmt wurde, ohne dass der Dosendeckel sich ausbeult. Bevorzugt besteht das Beschichtungssystem nur aus der Haftvermittlerschicht und der Polypropylenschicht, so dass ein besonders einfaches Schichtsystem auf einer Seite des Aluminiumbandes vorgesehen ist.

Erfindungsgemäß weist das verwendete Aluminiumlegierungsband eine Metalldicke von 0,12 mm bis 0,23 mm, vorzugsweise 0,16 mm bis 0,23 mm auf. Das Aluminiumlegierungsband kann in diesem Fall mit minimalem Metalleinsatz die notwendige Innendruckstabilität für den Dosendeckel bereitstellen.

Vorzugsweise ist als Aluminiumlegierung eine Aluminiumlegierung vom Typ AA 3104, AA 3105 oder AA3004 für das erfindungsgemäß verwendete Aluminiumlegierungsband vorgesehen. Die genannten Legierungen zeichnen sich durch ausreichende Festigkeit in Verbindung mit dem erfindungsgemäßen Aufbau des Aluminiumlegierungsbandes aus und können darüber hinaus auch sehr gut umgeformt werden. Insbesondere kann die Aluminiumlegierung des verwendeten Aluminiumlegierungsbandes auch auf den Dosenkörper abgestimmt werden, sodass eine einzige Legierung für eine Getränkedose verwendbar ist. Hierdurch wird ein optimiertes Unialloy-Konzept möglich, dass die Wiederverwertungsmöglichkeiten des recycelten Metalls für die Herstellung von Getränkedosen noch einmal verbessert.

Bevorzugt besitzt die Haftvermittlerschicht gemäß einer weiteren Ausgestaltung des verwendeten Aluminiumlegierungsbands Siegeleigenschaften und weist optional Polyolefin auf. Siegeleigenschaften haben sich insofern als vorteilhaft erwiesen, als dass diese ermöglichen, beim Verarbeitungsprozess zur Herstellung der Polypropylenschicht auch auf wirtschaftliche Laminierungsprozesse zurückgreifen zu können. Darüber hinaus erfolgt die Bereitstellung der Adhäsionskräfte durch Temperatureinwirkung und kann präzise gesteuert werden. Schließlich ergeben Polyolefine hohe Siegelkräfte und bieten gute Diffusionssperren für Medien zum Aluminiumlegierungsband.

Bei einer erfindungsgemäßen Verwendung des Aluminiumlegierungsbandes weist die Haftvermittlerschicht eine Dicke von 2 bis 20 g/m², vorzugsweise 2-10 g/m² auf. Bei den gewählten Schichtdicken wird gewährleistet, dass die notwendigen Adhäsionkräfte zur Polypropylenschicht prozesssicher bereitgestellt werden. Die Erzeugung der Haftvermittlerschicht kann im Bandprozess erfolgen. Bevorzugt wird zur Herstellung der Haftvermittlerschicht ein Haftvermittlerlack aufweisend eine Polyolefindispersion eingesetzt.

Bei einer erfindungsgemäßen Verwendung des Aluminiumlegierungsbandes ist auf der äußeren Seite des Aluminiumlegierungsbandes eine Lackschicht mit einer Dicke von 1-10 g/m², bevorzugt 2-8 g/ m² vorgesehen. Die äußere Lackschicht dient einerseits zum Korrosionsschutz des Aluminiumlegierungsbandes und andererseits zur Verbesserung von Umformeigenschaften. Der Außenlack kann aber auch als Grundlage für einen möglicherweise aufzubringenden Aufdruck auf die Außenseite, respektive auf den Dosendeckel der Getränkedose dienen. Die Lackschicht auf der äußeren Seite kann beispielsweise ebenfalls Polyolefin enthalten und über einen Lack aufweisend eine Polyolefindispersion bereitgestellt werden.

Durch die erfindungsgemäße Verwendung eines Aluminiumlegierungsbandes zur Herstellung eines Dosendeckels wird ermöglicht, eine Getränkedose mit einem einheitlichen Aluminiumlegierungskonzept aus Aluminiumlegierungen vom Typ AA3xxx herzustellen.

Die Erfindung soll im Weiteren anhand von Ausführungsbeispielen in Verbindung mit der Zeichnung näher erläutert werden. Die Zeichnung zeigt in
- Fig. 1: eine schematische, perspektivische Darstellung eines Ausführungsbeispiels einer erfindungsgemäßen Getränkedose,
- Fig. 2: in einer schematischen Draufsicht einen Dosendeckel hergestellt gemäß einem Ausführungsbeispiel durch Verwendung eines erfindungsgemäßen Aluminiumlegierungsbandes,
- Fig. 3: ein Ausführungsbeispiel eines erfindungsgemäßen Aluminiumlegierungsbandes in einer schematischen Schnittansicht und
- Fig. 4: ein weiteres Ausführungsbeispiel eines erfindungsgemäßen Aluminiumlegierungsbandes in einer schematischen Schnittansicht.

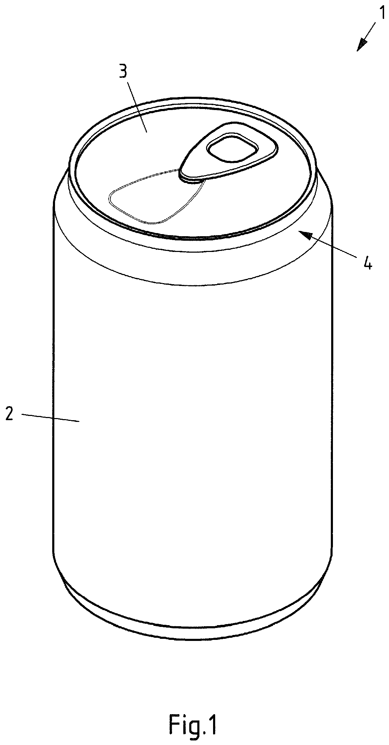

In Fig. 1 ist schematisch eine Getränkedose 1 bestehend aus einem Dosenkörper 2 zur Aufnahme eines Getränks sowie einem Dosendeckel 3 zum Verschließen des Dosenkörpers 2 dargestellt. Die erfindungsgemäße Getränkedose gemäß dem vorliegenden Ausführungsbeispiel weist sowohl im Dosenkörper als auch im Dosendeckel eine Aluminiumlegierung vom Typ AA3xxx auf.

Der Dosendeckel 3 der dargestellten Getränkedose ist hierzu zumindest teilflächig, vorzugsweise aber vollflächig, vorzugsweise auf der zum Dosenkörper weisenden Seite mit einer Beschichtung versehen, welche eine Haftvermittlerschicht und eine Polymerschicht mit einer Dicke von 5 bis 100 µm, vorzugsweise 10 bis 75 µm aufweist. Die Haftvermittlerschicht soll die Polymerschicht mit der Metallschicht des Dosendeckels mit ausreichender Haftkraft verbinden. Dies gewährleistet, dass der Dosendeckel bestehend aus einer Aluminiumlegierung vom Typ AA3xxx trotz der geringeren Festigkeit gegenüber einem Dosendeckel aus einer Aluminiumlegierung vom Typ AA5xxx eine ausreichende Innendruckstabilität gegen Ausbeulen beispielsweise bei einer Erhöhung oder Verringerung des Innendrucks der Getränkedose aufweist. Die erfindungsgemäße Getränkedose 1 kann aufgrund des Legierungskonzepts besonders gut recycelt werden und wirtschaftlich hergestellt werden.

Vorzugsweise weist die Haftvermittlerschicht des Dosendeckels Siegeleigenschaften auf, sodass bei der Herstellung des Dosendeckels die Polymerschicht durch wirtschaftliche Laminierungsprozesse hergestellt werden kann. Darüber hinaus hat sich gezeigt, dass die Siegeleigenschaften auch eine hinreichend hohe Haftkraft zur Polymerschicht bereitstellen können. Enthält die Haftvermittlerschicht optional Polyolefin, können besonders hohe Haftkräfte beim Siegelvorgang zur Verfügung gestellt werden und zur Verbindung des Metalls mit der Polymerschicht genutzt werden.

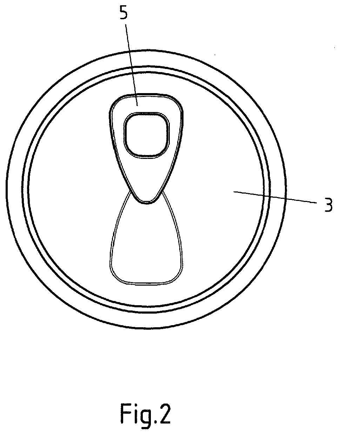

In Fig. 2 ist nun in einer schematischen Draufsicht ein Ausführungsbeispiel eines Dosendeckels 3 dargestellt, welcher getrennt vom Dosenkörper 2 hergestellt wird. Beide, der Dosendeckel 3 und der Dosenkörper 2 werden dann über eine Bördelung 4, wie sie in Fig. 1 angedeutet ist, gas- und wasserdicht miteinander verbunden. Der Dosendeckel 3 weist gemäß Fig. 2 zusätzlich eine Lasche 5 auf, welche bevorzugt bei der Herstellung des Dosendeckels aus einer identischen Aluminiumlegierung wie der Dosendeckel hergestellt wird.

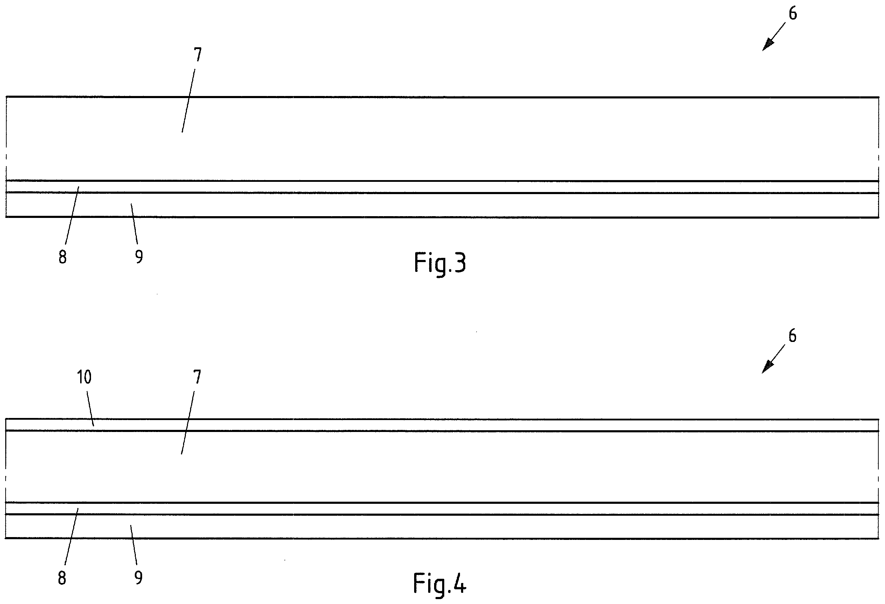

In Fig. 3 ist nun ein Ausführungsbeispiel eines erfindungsgemäß verwendeten Aluminiumlegierungsbandes 6 dargestellt, welches eine Metallschicht 7 aus einer Aluminiumlegierung vom Typ AA3xxx, insbesondere vom Typ AA3104, AA3105 oder AA3004 aufweist. In dem dargestellten Ausführungsbeispiel in Fig. 3 ist dies beispielsweise eine Aluminiumlegierung vom Typ AA3104 mit einer Metalldicke von 0,225 mm.

Als Haftvermittlerschicht 8 ist auf der dem Dosenkörper zugewandten Seite des Aluminiumlegierungsbands 6 eine Haftvermittlerschicht 8 mit Siegeleigenschaften enthaltend Polyolefin angeordnet. Die Haftvermittlerschicht 8 weist üblicherweise eine Dicke von 0,5-20 g/m², vorliegend von 4 g/m² auf und wurde in dem dargestellten Ausführungsbeispiel unter Verwendung einer Polyolefindispersion hergestellt.

Auf der dem Dosenkörper zugewandten Seite des Aluminiumlegierungsbands 6 ist vorzugsweise zusätzlich eine Polypropylenfolie vorgesehen. Im dargestellten Ausführungsbeispiel handelt es sich um eine Polypropylenfolie mit einer Dicke von 10 µm. Es hat sich gezeigt, dass durch die entsprechende Beschichtung des Aluminiumlegierungsbands bestehend aus einer AA3xxx Aluminiumlegierung die Verarbeitungseigenschaften nicht beeinträchtigt werden. Damit können ausreichend innendruckstabile Dosendeckel für Getränkedosen ohne große Umstellung der Produktionsprozesse aus einer Aluminiumlegierung vom Typ AA3xxx hergestellt und verwendet werden können. Schließlich können aus dem dargestellten Ausführungsbeispiel hergestellte Dosendeckel die für die Getränkedose erforderlichen Innendruckstabilität bereitstellen, so dass das dargestellte Aluminiumlegierungsband besonders gut geeignet ist, um eine aus einer einheitlichen Aluminiumlegierung bestehenden Getränkedose bereitzustellen.

Eine erfindungsgemäße Variante des Ausführungsbeispiels aus Fig. 3 zeigt Fig. 4, welche zusätzlich auf der äußeren Seite eine Lackschicht 10 aufweist, die zum Korrosionsschutz des außenliegenden Metalls und zur Verbesserung der Umformeigenschaften aufgebracht wird. Die Dicke der äußeren Lackschicht weist 1 bis 10 g/m², vorzugsweise 2 bis 8 g/ m² auf. Im vorliegenden Ausführungsbeispiel beträgt die Schichtdicke 4 g/m². Die äußere Lackschicht ist hier ebenfalls auf Basis einer Polyolefindispersion hergestellt worden.

Es hat sich herausgestellt, dass durch die erfindungsgemäße Verwendung des Aluminiumlegierungsbands auf einfache Art und Weise eine Getränkedose basierend auf einem einheitlichen Legierungskonzept vom Typ AA3xxx bereitgestellt werden kann und damit die Recyclingfähigkeit der Getränkedose weiter verbessert werden kann.

## Patentansprüche

1. Getränkedose (1) für kohlensäurehaltige Getränke bestehend aus einem Dosenkörper (2) zur Aufnahme des Getränks und einem Dosendeckel (3) zum Verschließen des Dosenkörpers (2), wobei der Dosenkörper (2) aus einer Aluminiumlegierung vom Typ AA3xxx ausgebildet ist, wobei der Dosendeckel (3) aus einer Aluminiumlegierung vom Typ AA3xxx ausgebildet ist,
**dadurch gekennzeichnet, dass**
der Dosendeckel (3) zumindest teilflächig, vorzugsweise vollflächig eine Beschichtung aufweist, welche eine Haftvermittlerschicht (8) und eine Polypropylenschicht (9) mit einer Dicke von 5 bis 100 µm, vorzugsweise 10 bis 75 µm umfasst, wobei die Beschichtung aus Haftvermittler und Polypropylenschicht auf der zum Dosenkörper weisenden Seite des Dosendeckels angeordnet ist, der Dosendeckel (3) eine Metalldicke von 0,12 mm bis 0,23 mm aufweist und die Haftvermittlerschicht (8) eine Dicke von 2 - 20 g/m² aufweist, wobei auf der äußeren Seite des Dosendeckels (3) eine Lackschicht (10) mit einer Dicke von 1 bis 10 g/m² vorgesehen ist.

2. Getränkedose nach Anspruch 1,
**dadurch gekennzeichnet, dass**
die Haftvermittlerschicht (8) Siegeleigenschaften besitzt und optional Polyolefine aufweist.

3. Getränkedose nach einem der Ansprüche 1 oder 2,
**dadurch gekennzeichnet, dass**
die Polyproylenschicht (9) mit einer Polypropylenfolie bereitgestellt wird.

4. Getränkedose nach einem der Ansprüche 1 bis 3,
**dadurch gekennzeichnet, dass**
als Aluminiumlegierung für den Dosenkörper (2) und/oder den Dosendeckel (3) eine Aluminiumlegierung vom Typ AA 3104, AA 3105 oder AA 3004 vorgesehen ist.

5. Getränkedose nach einem der Ansprüche 1 bis 4,
**dadurch gekennzeichnet, dass**
die Haftvermittlerschicht (8) eine Dicke von 2 - 10 g/m² aufweist.

6. Getränkedose nach einem der Ansprüche 1 bis 5,
**dadurch gekennzeichnet, dass**
ein Dosendeckel (3) mit einer Metalldicke von 0,16 mm bis 0,23 mm vorgesehen ist.

7. Verwendung eines Aluminiumlegierungsbands (6) zur Herstellung eines Getränkedosendeckels (3) für eine Getränkedose gemäß Anspruch 1 bis 6, wobei das Band (6) eine Aluminiumlegierung (7) vom Typ AA3xxx aufweist,
**dadurch gekennzeichnet, dass**
das Aluminiumlegierungsband (6) zumindest teilflächig, vorzugsweise vollflächig eine Beschichtung aufweist, welche eine Haftvermittlerschicht (8) und eine Polypropylenschicht (9) mit einer Dicke von 5 bis 100 µm, vorzugsweise 10 bis 75 µm umfasst, die Haftvermittlerschicht (8) eine Dicke von 2 - 20 g/m² aufweist und das Band eine Metalldicke (7) von 0,12 mm bis 0,23 mm aufweist, wobei auf der äußeren Seite des Aluminiumlegierungsbandes (6) eine Lackschicht (10) mit einer Dicke von 1 bis 10 g/m² vorgesehen ist.

8. Verwendung nach Anspruch 7,
**dadurch gekennzeichnet, dass** das Band eine Metalldicke (7) von 0,16 mm bis 0,23 mm aufweist.

9. Verwendung nach Anspruch 7 oder 8,
**dadurch gekennzeichnet, dass**
als Aluminiumlegierung (7) eine Aluminiumlegierung vom Typ AA 3104, AA 3105 oder AA 3004 vorgesehen ist.

10. Verwendung nach einem der Ansprüche 7 bis 9,
**dadurch gekennzeichnet, dass**
die Haftvermittlerschicht (8) Siegeleigenschaften besitzt und optional Polyolefine aufweist.

11. Verwendung nach einem der Ansprüche 7 bis 10,
**dadurch gekennzeichnet, dass**
die Haftvermittlerschicht (8) eine Dicke von 2 - 10 g/m² aufweist.

12. Verwendung nach einem der Ansprüche 7 bis 11,
**dadurch gekennzeichnet, dass**
auf der äußeren Seite des Aluminiumlegierungsbandes (6) eine Lackschicht (10) mit einer Dicke von 2 bis 8 g/m² vorgesehen ist.

## Claims

1. Beverage can (1) consisting of a can body (2) for receiving the beverage and a can lid (3) for closing the can body (2), the can body (2) being made of an aluminium alloy of the type AA3xxx, the can lid (3) being made of an aluminium alloy of the type AA3xxx,
**characterized in that**
the can lid (3) has a coating over at least part of the surface, preferably the entire surface, which comprises an adhesion promoter layer (8) and a polypropylene layer (9) having a thickness of 5 to 100 µm, preferably 10 to 75 µm, wherein the adhesion promoter layer and the polypropylene layer are arranged on the side of the can lid facing the can body, the can lid (3) comprises a metal thickness of 0.12 mm to 0.23 mm, the adhesion promoter layer (8) has a thickness of 2 - 20 g/m² and wherein a lacquer layer (10) with a thickness of 1 to 10 g/m² is provided on the outer side of the can lid (3).

2. Beverage can according to claim 1,
**characterized in that**
the adhesion promoter layer (8) has sealing properties and optionally comprises polyolefins.

3. Beverage can according to claim 1 or 2,
**characterized in that**
the polypropylene layer (9) is provided with a polypropylene film.

4. Beverage can according to any one of claims 1 to 3,
**characterized in that**
an aluminum alloy of the type AA 3104, AA 3105 or AA 3004 is provided as the aluminum alloy for the can body (2) and/or the can lid (3).

5. Beverage can according to any one of claims 1 to 4,
**characterized in that**
the adhesion promoter layer (8) has a thickness of 2 - 10 g/m².

6. Beverage can according to any one of claims 1 to 5,
**characterized in that**
a can lid (3) with a metal thickness of 0.16 mm to 0.23 mm, is provided.

7. Use of an aluminium alloy strip (6) for manufacturing a beverage can lid (3) for a beverage can according to claim 1 to 7, the strip (6) comprising an aluminium alloy (7) of type AA3xxx,
**characterized in that**
the aluminium alloy strip (6) has a coating over at least part of the surface, preferably the entire surface, which comprises an adhesion promoter layer (8) and a polypropylene layer (9) having a thickness of 5 to 100 µm, preferably 10 to 75 µm, the adhesion promoter layer (8) has a thickness of 2 - 20 g/m² and the strip comprises a metal thickness (7) of 0.12 mm to 0.23 mm, and wherein a lacquer layer (10) with a thickness of 1 to 10 g/m² is provided on the outer side of the aluminium alloy strip (6).

8. Use according to claim 7,
**characterized in that**
the strip has a metal thickness (7) of 0.16 mm to 0.23 mm.

9. Use according to claim 7 or 8,
**characterized in that**
an aluminium alloy of the type AA 3104, AA 3105 or AA 3004 is provided as the aluminium alloy (7).

10. Use according to any one of claims 7 to 9,
**characterized in that**
the adhesion promoter layer (8) has sealing properties and optionally comprises polyolefins.

11. Use according to any one of claims 7 to 10,
**characterized in that**
the adhesion promoter layer (8) has a thickness of 2 - 10 g/m².

12. Use according to any one of claims 8 to 11,
**characterized in that**
a varnish layer (10) with a thickness of 2 to 8 g/m², is provided on the outer side of the aluminium alloy strip (6).

## Revendications

1. Boîte de boisson (1) constituée d'un corps de boîte (2) pour contenir la boisson et d'un couvercle de boîte (3) pour fermer le corps de boîte (2), le corps de boîte (2) étant formé d'un alliage d'aluminium du type AA3xxx, le couvercle de boîte (3) étant formé d'un alliage d'aluminium du type AA3xxx,
**caractérisée en ce que**
le couvercle de boîte (3) présente, au moins sur une partie de la surface, de préférence sur toute la surface, un revêtement qui comprend une couche de promoteur d'adhésion (8) et une couche de polypropylène (9) ayant une épaisseur de 5 à 100 µm, de préférence 10 à 75 µm, le revêtement constitué d'un agent adhésif et d'une couche de polypropylène étant disposé sur le côté du couvercle de la boîte orienté vers le corps de la boîte, le couvercle de la boîte (3) présentant une épaisseur de métal de 0,12 mm à 0,23 mm, la couche d'agent adhésif (8) présentant une épaisseur de 2 à 20 g/m² et une couche de vernis (10) d'une épaisseur de 1 à 10 g/m² étant prévue sur le côté extérieur du couvercle de la boîte (3).

2. Boîte de boisson selon la revendication 1,
**caractérisée en ce que**
la couche de promoteur d'adhésion (8) a des propriétés de scellage et comprend facultativement des polyoléfines.

3. Boîte de boisson selon la revendications 1 ou 2,
**caractérisée en ce que**
la couche de polypropylène (9) est fourni par un film de polypropylène.

4. Boîte de boisson selon l'une quelconque des revendications 1 à 3,
**caractérisée en ce que**
un alliage d'aluminium du type AA 3104, AA 3105 ou AA 3004 est prévu comme l'alliage d'aluminium pour le corps de boîte (2) et/ou le couvercle de boîte (3).

5. Boîte de boisson selon l'une quelconque des revendications 1 à $,
**caractérisée en ce que**
la couche de promoteur d'adhésion (8) a une épaisseur de 2 - 10 g/m².

6. Boîte de boisson selon l'une quelconque des revendications 1 à %,
**caractérisée en ce que**
un couvercle de boîte (3) avec une épaisseur de métal de 0,16 mm à 0,23 mm est prévu.

7. Utilisation d'une bande d'alliage d'aluminium (6) pour la fabrication d'une couvercle de boîte de boisson (3) pour une boîte de boisson selon les revendications 1 à 6, la bande (6) comprenant un alliage d'aluminium (7) du type AA3xxx,
**caractérisée en ce que**
la bande d'alliage d'aluminium (6) présente, au moins sur une partie de la surface, de préférence sur toute la surface, un revêtement qui comprend une couche de promoteur d'adhésion (8) et une couche de polypropylène (9) ayant une épaisseur de 5 à 100 µm, de préférence 10 à 75 µm, la couche de promoteur d'adhésion (8) a une épaisseur de 2 à 20 g/m² et la bande a une épaisseur de métal (7) de 0,12 mm à 0,23 mm et une couche de vernis (10) d'une épaisseur de 1 à 10 g/m² est prévue sur le côté extérieur de la bande en alliage d'aluminium (6).

8. Utilisation selon la revendication 7,
**caractérisée en ce que**
la bande a une épaisseur de métal (7) de 0,16 mm à 0,23 mm.

9. Utilisation selon la revendication 7 ou 8,
**caractérisée en ce que**
un alliage d'aluminium du type AA 3104, AA 3105 ou AA 3004 est prévu comme l'alliage d'aluminium (7).

10. Utilisation selon l'une quelconque des revendications 7 à 9,
**caractérisée en ce que**
la couche de promoteur d'adhésion (8) a des propriétés de scellage et comprend facultativement des polyoléfines.

11. Utilisation selon l'une quelconque des revendications 7 à 11,
**caractérisée en ce que**
la couche de promoteur d'adhésion (8) a une épaisseur de 2 - 10 g/m².

12. Utilisation selon l'une quelconque des revendications 7 à 11,
**caractérisée en ce que**
une couche de vernis (10) ayant une épaisseur de 2 à 8 g/m², est prévue sur le côté extérieur de la bande d'alliage d'aluminium (6).
